# FASCICULE DE BREVET EUROPEEN

(11) **EP 3 025 046 B1**
(45) Date de publication et mention de la délivrance du brevet: **31.05.2017**
(21) Numéro de dépôt: 14742508.6
(22) Date de dépôt: 23.07.2014
(51) Int. Cl.: F02K 1/80, F02K 9/90, F02K 9/97

(54) **TUYÈRE D'ÉJECTION DE GAZ DE COMBUSTION D'UN MOTEUR FUSÉE POURVUE D'UN DISPOSITIF D'ÉTANCHÉITÉ ENTRE UNE PARTIE FIXE ET UNE PARTIE MOBILE DE LA TUYÈRE**
VERBRENNUNGSGASENTLADUNGSDÜSE EINES RAKETENTRIEBWERKES MIT EINEM DICHTUNGSELEMENT ZWISCHEN EINEM STEHENDEN UND EINEM BEWEGLICHEN TEIL DER DÜSE
COMBUSTION GAS DISCHARGE NOZZLE FOR A ROCKET ENGINE PROVIDED WITH A SEALING DEVICE BETWEEN A STATIONARY PART AND A MOVING PART OF THE NOZZLE

(30) Priorité: 26.07.2013 FR 1357381
(43) Date de publication de la demande: 01.06.2016
(73) Titulaire: Airbus Safran Launchers SAS, 75015 Paris (FR)
(72) Inventeur: DUTHEIL, Jean-Philippe, F-33127 Martignas sur Jalles (FR)
(74) Mandataire: Schmit, Christian Marcel Jean
(86) Numéro de dépôt international: PCT/EP2014/065838
(87) Numéro de publication internationale: WO 2015/011198

(56) Documents cités:
- EP-A1- 1 482 127
- EP-A2- 1 959 124
- FR-A1- 2 924 411
- US-A- 3 159 524
- US-A- 3 358 932

## Description

### Arrière plan de l'invention

### Domaine de l'invention

La présente invention concerne une tuyère d'éjection de gaz de combustion d'un moteur fusée pourvue d'un dispositif d'étanchéité entre une partie fixe et une partie mobile de la tuyère. L'invention s'applique particulièrement à un moteur fusée d'un véhicule spatial tel qu'un avion spatial notamment. La partie mobile est plus particulièrement réalisée au moyen de volets orientables de la tuyère. Ce dispositif est selon un mode de réalisation de l'invention combiné avec un dispositif de refroidissement de divergent de la tuyère.

### Arrière plan technologique

La présente invention perfectionne et s'appuie sur un dispositif à volets orientables tels que décrit dans le document EP 2 222 565 A1.

Les tuyères adaptatives connues sur moteurs à turbines ne sont pas réalisées sur des moteurs fusée en effet, dans le cas d'utilisation spatiale des moteurs fusée notamment l'environnement extérieur étant à une pression inférieure à la pression des gaz chauds, si la liaison n'est pas étanche, ces derniers vont s'écouler par cette liaison à l'extérieur de la tuyère. Cet écoulement va créer des forces perturbatrices, réduisant la performance en réduisant le débit axial éjecté et peut éventuellement détruire par flux thermique ou incendie le mécanisme actionnant les pétales ou volets de la partie tuyère mobile et/ou la structure arrière du véhicule. Un point essentiel à mettre en oeuvre réside donc dans la réalisation d'une étanchéité au niveau de la liaison entre partie mobile et partie fixe de la tuyère vis-à-vis des gaz chauds détendus à l'intérieur de la tuyère.

### Brève description de l'invention

L'invention à pour objet de proposer une solution à ce besoin d'étanchéité au droit de la section où se situe la partie mobile de la tuyère et propose pour ce faire une tuyère d'éjection de gaz de combustion d'un moteur fusée comprenant une partie fixe et une partie mobile, prolongeant la partie fixe, ladite partie mobile, réalisée au moyen de volets, étant disposée en aval de la partie fixe et formant une extension de la tuyère, la tuyère comportant un dispositif d'étanchéité entre la partie fixe et la partie mobile sous forme d'une membrane souple résistant à une température de combustion en sortie de tuyère et reliant l'extrémité de la partie fixe à une bordure des volets ou pétales formant la partie mobile, la membrane souple formant une tubulure annulaire, le dispositif étant pourvu de moyens d'injection de gaz au niveau de la membrane souple entre la partie fixe et la partie mobile prolongeant ladite tuyère.

Cette réalisation a en particulier comme avantage d'une part de permettre la réalisation de volets mobiles tout en évitant des pertes de jet entre la partie fixe de la tuyère et les parties mobiles et d'autre part de limiter la température subie par les volets et par la membrane d'étanchéité.

Dans ce cas, la tubulure annulaire est préférablement configurée pour distribuer le gaz sur le pourtour de la section de sortie de la partie fixe de la tuyère.

La tubulure annulaire est avantageusement située au droit d'une articulation de la partie mobile.
la membrane souple est un tissu à base de silice adapté à une tenue en continu à une température de au moins 1000°C.

Selon un mode de réalisation particulier, la barrière comporte un isolant céramique entre deux tissus, l'un constitué par un tissu réalisé à partir d'une fibre céramique réfractaire aluminoborosilicate en face chaude, l'autre de type fibres aramides tel que le poly-paraphénylène téréphtalamide en face froide, ce dernier tissu étant destiné à assurer la tenue mécanique du produit.

L'invention concerne en outre un moteur fusée comportant une tuyère à partie fixe, partie mobile et dispositif d'étanchéité tel que défini précédemment pour lequel les volets sont arrangés autour de la section de sortie de la tuyère du moteur fusée en prolongement de la partie fixe.

La membrane souple forme avantageusement une tubulure annulaire d'injection de gaz d'échappement d'une turbine de turbopompe du moteur fusée entre la partie fixe de la tuyère et la partie mobile prolongeant ladite tuyère, la pression des gaz d'échappement étant réglée pour être supérieure à la pression des gaz en sortie de la partie fixe de la tuyère.

Selon un mode de réalisation particulier, les volets sont articulés sur un cadre du véhicule.

Le cadre fait avantageusement partie du fuselage arrière dans lequel est installé le moteur fusée.

Les volets sont préférablement mobiles et adaptés à faire prendre à la partie mobile:
une forme de cône fermé, afin d'assurer une forme externe aérodynamique qui minimise la trainée de culot du véhicule en vol atmosphérique moteur fusée éteint;
une forme en cylindre au moment de l'allumage du moteur fusée;
une forme de divergent conique en prolongement et en continuité de la section de sortie du divergent du moteur fusée afin de favoriser l'expansion du jet du moteur fusée;

L'ouverture du cône peut être variable en fonction de l'accroissement d'altitude durant le vol propulsé fusée.

L'aéronef comporte avantageusement un mécanisme de basculement des volets adapté à permettre des ouvertures ou fermetures différentielles desdits volets qui dévient le jet du moteur fusée et créent ainsi une composante de poussée latérale, qui permet le pilotage du véhicule selon les axes de tangage et de lacet.

Les volets sont préférablement disposés en deux rangs à recouvrement des surfaces interne/externes entre volets adjacents et adaptés à permettre une variation de section de sortie de la tuyère tout en conservant un recouvrement qui minimise les fuites du gaz de combustion éjecté.

### Brève description des dessins

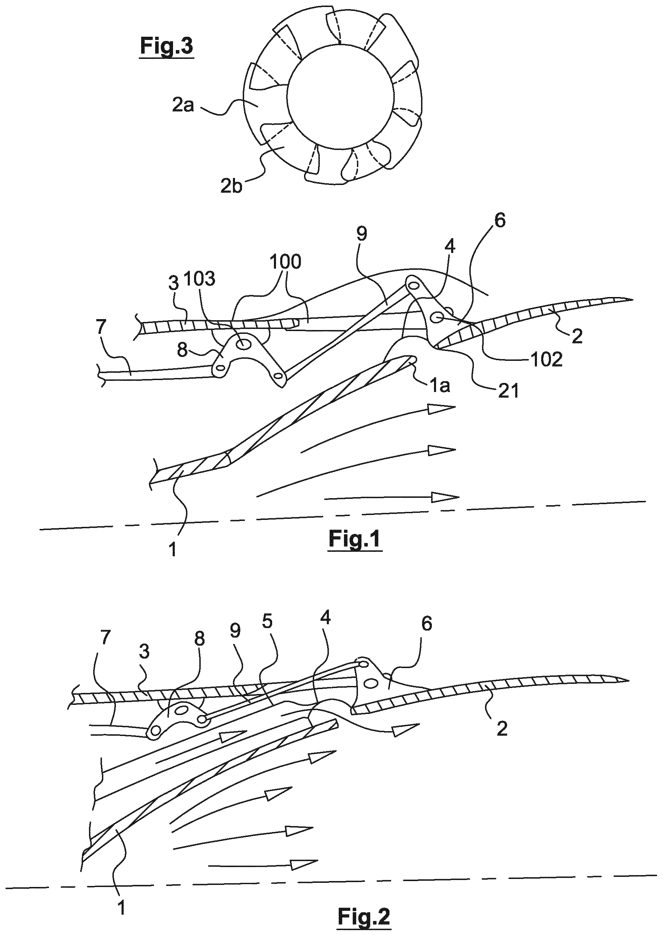

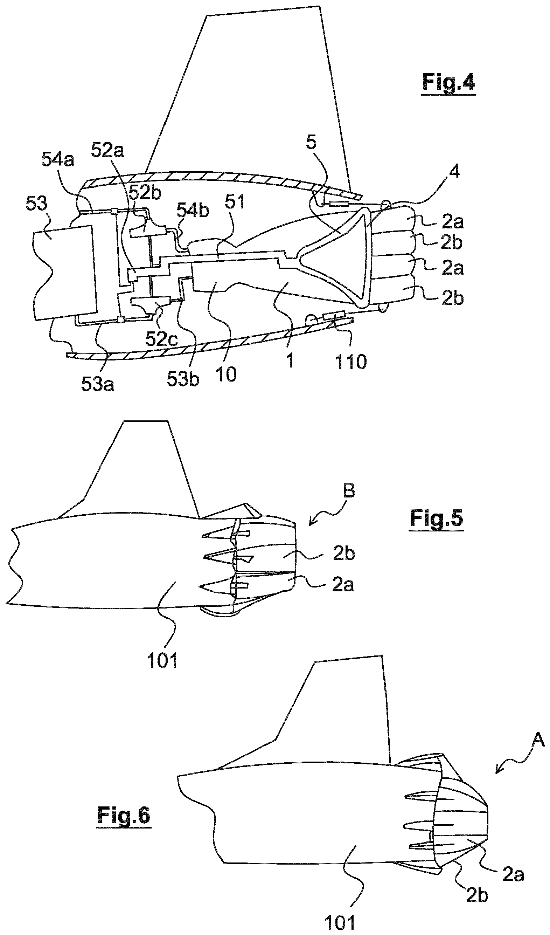

D'autres caractéristiques et avantages de l'invention seront apparents à la lecture de la description qui suit d'un exemple non limitatif de réalisation de l'invention en référence aux dessins qui représentent:
en figure 1: une vue schématique en coupe d'une tuyère selon un premier mode de réalisation de l'invention;
en figure 2: une vue schématique en coupe d'une tuyère selon un second mode de réalisation de l'invention;
en figure 3: une vue de l'arrière d'un arrangement particulier de volets de l'invention;
en figure 4: une vue schématique en coupe de l'arrière d'un aéronef muni d'un moteur fusée équipé de volets selon l'invention en position d'ouverture de la tuyère;
en figure 5: l'arrière d'aéronef de la figure 4 avec les volets refermant en partie la tuyère du moteur fusée;
en figure 6: l'arrière d'aéronef de la figure 4 avec les volets refermant entièrement la tuyère du moteur fusée;

### Description détaillée de modes de réalisation de l'invention

La présente invention concerne en premier lieu un système de volets arrangés en forme de pétales autour de la section de sortie d'une tuyère du moteur fusée, et monté sur un cadre du véhicule appartenant au fuselage arrière dans lequel est installé le moteur fusée.

Dans la présente invention, les volets et le divergent sont conçus de manière traditionnelle en fonction des contraintes de température et des contraintes mécaniques à subir. Ils peuvent être en matériaux métalliques ou céramiques être réfractaires ou refroidis par exemple par circulation interne d'ergols froids.

L'invention s'applique en particulier à un moteur fusée fonctionnant en cycle Générateur de Gaz.

Le système d'articulation des volets mobiles ou pétales de la tuyère du moteur fusée est ici basé sur un montage avec charnières, actionneur électromécanique et biellettes de transmission qui permettent d'orienter les volets pour refermer ou ouvrir la tuyère dans sa partie mobile.

La figure 1 représente en coupe l'un des volets 2 articulé par un dispositif de manoeuvre, ici réalisé au moyen de bielles 7, 9, leviers et basculeurs 6, 8 qui renvoient des commandes, issues par exemple de vérins 110, destinées à orienter les volets. Les volets sont reliés à un cadre 100 sur lequel sont créés des points d'articulation 102, 103 pour permettre les mouvements de rotation des volets et coordonner les éléments du dispositif de manoeuvre.

Le dispositif actionné par les vérins 110 est relié aux commandes de l'appareil ou au calculateur de pilotage qui commande les vérins en fonction de phases de vol.

Le dispositif est adapté à manoeuvrer chaque volet indépendamment ou à les commander ensemble.

Le volet 2 est disposé en prolongement de la partie fixe 1 d'une tuyère de moteur fusée.

La forme des volets mobiles et leur cinématique sont déterminés pour obtenir un recouvrement des surfaces interne/externes entre éléments mobiles adjacents afin de permettre une variation de section de sortie de la tuyère tout en minimisant les fuites du gaz de combustion éjecté. Selon la figure 3, les volets sont pour ce faire positionnés en deux rangs dont des volets 2b d'un premier rang ont leurs extrémités latérales en partie recouvertes par les volets 2a d'un second rang. Le recouvrement par rapport à la surface des volets est déterminé pour minimiser au maximum, voir supprimer totalement, les fuites interstitielles entre les volets sur la totalité de l'étendue de la manoeuvre de ces derniers à la manière d'un système similaire à un diaphragme tout en conservant un nombre de volets raisonnable par rapport à la complexité de commande et à la masse des dispositifs de commande embarqués.

De retour à la figure 1, des moyens d'étanchéité sont disposés entre la partie fixe 1 de la tuyère et la partie mobile 2. Ces moyens d'étanchéité sont réalisés au moyen d'une membrane souple 4 en forme de tubulure annulaire reliant l'extrémité distale 1a de la partie fixe 1 et le bord 21, adjacent à cette extrémité, des volets 2, 2a, 2b réalisant la partie mobile.

C'est une membrane souple, s'étendant sur le pourtour de la jonction entre la partie fixe et la partie mobile, fixée de manière lâche à ces parties et qui, de par sa forme galbée ou en soufflet, s'adapte aux déplacement des volets.

La membrane souple est de type barrière thermique souple faite avec des produits céramiques, certains étant capable de supporter en continu des température supérieures à 1000°C voire même 1300°C,la barrière comportant par exemple un isolant céramique entre deux tissus, l'un tel qu'un matériau constitué par un tissu d'une fibre céramique réfractaire aluminoborosilicate (connu sous la marque Nextel 440 de la société 3M) revêtue d'une couche organique de finition en face chaude, l'autre de type fibres d'aramides tel que le poly-paraphénylène téréphtalamide connu sous la marque Kevlar en face froide, ce dernier tissu étant destiné à assurer la tenue mécanique du produit.

La fixation de la membrane sur le divergent et les volets se fait par exemple mécaniquement avec des techniques connues notamment du fait que la température y est relativement basse, entre 600 et 1000°C maximum.

On utilisera par exemple une fixation utilisant des trous de fixations du type boutonnière en bordure de la membrane souple, des pions sur les faces froides des divergents, ces pions étant mis en place par soudure ou brasage par exemple ce qui est connu aussi, que ce soit sur céramique ou sur métal.

Les pions filetés à leur extrémité libre sont passés dans les boutonnières de la membrane souple.

Des écrous vissés sur les pions serrent la membrane souple.

Une baguette percée pour recevoir les pions est éventuellement ajoutée entre les écrous et la membrane de façon à assurer une meilleure étanchéité entre membrane et divergent.

Un espace est conservé entre l'extrémité distale de la partie fixe et le bord adjacent des volets au contraire d'une réalisation bord à bord.

Cet espace forme un intervalle entre la partie fixe et la partie mobile qui peut varier lors des changements d'orientation des volets ce qui permet d'en simplifier la commande.

Cet intervalle entre les volets et le divergent est de quelques millimètres, par exemple de 1 à 4 mm et on cherche à le minimiser tout en tenant compte des jeux, des dilatations différentielles ou autres contraintes présentes à ce niveau du divergent.

Dans cette optique, le dispositif d'étanchéité formé par la membrane entre la partie fixe de la tuyère et la partie mobile est situé au droit de l'articulation de la partie mobile et reprend ainsi les variations de distance entre la partie fixe et la partie mobile.

Selon la figure 2, la membrane reçoit des conduits 5 d'amenée de gaz d'échappement d'une turbopompe, telle que représentée en figure 4.

La turbopompe selon l'exemple comporte une turbine 52a et des pompes 52b, 52c qui alimentent le moteur fusée 10 en comburant depuis un réservoir 53 au travers de tubulures 53a, 53b et en carburant à partir d'un réservoir non représenté au travers de tubulures 54a, 54b.

Selon l'exemple, le dispositif d'étanchéité constitué de la membrane souple 4 forme une tubulure annulaire d'injection des gaz d'échappement de la turbine de la turbopompe entre la partie fixe 1 et la partie mobile 2.

La tubulure annulaire distribue le flux des gaz d'échappement turbine amenés par les conduits 5 sur le pourtour de la section de sortie de la tuyère fixe.

Ces gaz vont se propager dans la tubulure réalisée par la membrane souple 4 pour se distribuer uniformément entre la partie mobile 1 et la partie fixe 2 et sont alors introduits entre la partie fixe et la partie mobile à l'intérieur de la tuyère selon une distribution radiale.

La membrane souple 4 qui relie la lèvre extérieure de la partie fixe 1 à chaque bordure des volets mobiles 2 est réalisée par exemple dans un tissus à base de silice et/ou de céramique résistant à très haute température typiquement un tissu adapté à une tenue en continu à une température de 1000°C, le tissu étant par exemple d'une épaisseur d'au moins 1 mm.

Son effet consiste à assurer l'étanchéité de la partie fixe de la tuyère avec la partie mobile et à conduire les gaz d'échappement turbine qui sont à environ 700°C / 800°C vers la veine de gaz de propulsion àl'intérieur de la tuyère. Sans ce refroidissement, les gaz arrivant au niveau de l'interstice divergent/volets seraient à environ 1500°C ce qui serait problématique pour le fonctionnement des volets et leur tenue dans le temps.

La pression des gaz d'échappement est réglée pour être supérieure à la pression des gaz de la tuyère qui sont déjà fortement détendus au niveau de cette section où leur pression est d'environ 200mbar. Une pression de gaz d'échappement typiquement de 1 bar permet par exemple de s'opposer aux gaz de la tuyère. Le réglage de la pression des gaz d'échappement se fait au niveau de la conception globale du dispositif turbopompe, tuyauteries, orifices de fuites, avec éventuellement des cols soniques de réglage sur les tuyauteries.

Les gaz d'échappement turbine sont ainsi utilisés pour constituer un matelas gazeux s'opposant à la sortie des gaz de combustion du moteur fusée entre la partie fixe et la partie mobile ce qui évite des pertes de rendement du moteur fusée, et la détérioration de la zone arrière du véhicule.

En outre les gaz d'échappement turbine s'écoulent le long de la paroi vers la sortie du divergent et protègent ainsi les parties mobiles de la chaleur du jet du moteur fusée.

Les volets sont par exemple des volets mobiles adaptés à prendre diverses positions en fonction des phases de vol de l'aéronef.

Selon la figure 4, les volets 2 sont positionnés en forme de divergent conique en prolongement et en continuité de la section de sortie de la partie fixe de la tuyère du moteur fusée. La forme de la partie mobile, et notamment son angle de sortie, est dans ce cas adaptée pour être compatible avec cette continuité afin de favoriser l'expansion du jet du moteur fusée.

Cette configuration offre un gain de performance au moteur et notamment l'ouverture du cône peut être variable, via les actionneurs des volets, en fonction de l'accroissement d'altitude durant le vol propulsé fusée.

Selon la figure 5, les volets sont conformés pour former un cylindre derrière la partie fixe de la tuyère par exemple au moment de l'allumage du moteur fusée pour améliorer la combustion du moteur.

Selon la figure 6, les volets sont refermés pour prendre une forme de cône afin d'assurer une forme externe aérodynamique qui minimise la trainée de culot du véhicule en vol atmosphérique lorsque le moteur fusée est éteint ce qui dans le cas d'un avion spatial offre un gain de performance à l'aéronef propulsé par son ou ses moteurs aérobie ou lorsqu'il est en plané.

De plus, le mécanisme de basculement des volets permet des ouvertures ou fermetures différentielles, qui dévient le jet du moteur fusée et créent ainsi une composante de poussée désaxée ce qui permet le pilotage du véhicule selon les axes de tangage et de lacet.

L'invention n'est pas limitée aux exemples représentés et notamment le nombre de volets représentés sur les figures n'est pas limitatif.

## Revendications

1. Tuyère d'éjection de gaz de combustion d'un moteur fusée (10) comprenant une partie fixe (1) et une partie mobile (2), prolongeant la partie fixe, ladite partie mobile, réalisée au moyen de volets (2a, 2b), étant disposée en aval de la partie fixe et formant une extension de la tuyère, **caractérisé en ce qu'**elle comporte un dispositif d'étanchéité entre la partie fixe et la partie mobile sous forme d'une membrane souple (4) résistant à une température locale des gaz de combustion en sortie de tuyère et reliant l'extrémité de la partie fixe à une bordure des volets ou pétales formant la partie mobile, et **en ce que** la membrane souple (4) forme une tubulure annulaire, le dispositif étant pourvu de moyens (5) d'injection de gaz d'échappement d'une turbine (52a) d'une turbopompe au niveau de la membrane souple entre la partie fixe (1) et la partie mobile (2) prolongeant ladite tuyère.

2. Tuyère selon la revendication 1 pour laquelle la tubulure annulaire est configurée pour distribuer le gaz sur le pourtour de la section de sortie de la partie fixe (1) de la tuyère.

3. Tuyère selon la revendication 1 ou 2 pour laquelle la tubulure annulaire est située au droit d'une articulation (6) de la partie mobile.

4. Tuyère selon l'une quelconque des revendications précédentes pour laquelle la membrane souple est un tissu à base de silice adapté à une tenue en continu à une température de au moins 1000°C.

5. Tuyère selon l'une quelconque des revendications précédentes pour laquelle la barrière comporte un isolant céramique entre deux tissus, l'un constitué par un tissu réalisé à partir d'une fibre céramique réfractaire aluminoborosilicate en face chaude, l'autre de type fibres aramides tel que le poly-paraphénylène téréphtalamide en face froide, ce dernier tissu étant destiné à assurer la tenue mécanique du produit.

6. Moteur fusée comportant une tuyère à partie fixe (1), partie mobile (2) et dispositif d'étanchéité selon l'une quelconque des revendications précédentes pour lequel les volets sont arrangés autour de la section de sortie de la tuyère du moteur fusée en prolongement de la partie fixe.

7. Moteur fusée selon la revendication 6 pour lequel la membrane souple forme une tubulure annulaire d'injection des gaz d'échappement de la turbine (52a) de la turbopompe d'alimentation du moteur fusée entre la partie fixe de la tuyère et la partie mobile prolongeant ladite tuyère, la pression des gaz d'échappement étant réglée pour être supérieure à la pression des gaz en sortie de la partie fixe de la tuyère.

8. Aéronef comportant un moteur fusée selon la revendication 6 ou 7 pour lequel les volets (2a, 2b) sont articulés sur un cadre (100) du véhicule.

9. Aéronef selon la revendication 8 pour lequel le cadre (100) fait partie du fuselage arrière (101) dans lequel est installé le moteur fusée (10).

10. Aéronef selon la revendication 8 ou 9 pour lequel les volets (2a, 2b) sont mobiles et adaptés à faire prendre à la partie mobile:
une forme de cône fermé (A), afin d'assurer une forme externe aérodynamique qui minimise la trainée de culot du véhicule en vol atmosphérique moteur fusée éteint;
une forme en cylindre (B) au moment de l'allumage du moteur fusée;
une forme de divergent conique (C) en prolongement et en continuité de la section de sortie du divergent du moteur fusée afin de favoriser l'expansion du jet du moteur fusée.

11. Aéronef selon la revendication 10 pour lequel l'ouverture du cône est variable en fonction de l'accroissement d'altitude durant le vol propulsé fusée.

12. Aéronef selon la revendication 10 ou 11 comportant un mécanisme (6, 7, 8, 9) de basculement des volets adapté à permettre des ouvertures ou fermetures différentielles desdits volets qui dévient le jet du moteur fusée et créent ainsi une composante de poussée latérale, qui permet le pilotage du véhicule selon les axes de tangage et de lacet.

13. Aéronef selon l'une quelconque des revendications 8 à 12 pour lequel les volets (2a, 2b) sont disposés en deux rangs à recouvrement des surfaces interne/externes entre volets adjacents et adaptés à permettre une variation de section de sortie de la tuyère tout en conservant un recouvrement qui minimise les fuites du gaz de combustion.

## Patentansprüche

1. Schubdüse für Verbrennungsgas eines Raketentriebwerks (10), aufweisend einen festen Abschnitt (1) und einen beweglichen Abschnitt (2), welcher den festen Abschnitt verlängert, wobei der bewegliche Abschnitt, welcher mittels Klappen (2a, 2b) ausgeführt ist, stromabwärts von dem festen Abschnitt angeordnet ist und eine Erweiterung der Düse bildet, **dadurch gekennzeichnet, dass** sie zwischen dem festen Abschnitt und dem beweglichen Abschnitt eine Abdichtungsvorrichtung in Form einer flexiblen Membran (4) aufweist, welche widerstandsfähig gegenüber einer lokalen Temperatur der Verbrennungsgase am Düsenausgang ist und das Ende des festen Abschnitts mit einem Rand der Klappen oder Blätter, welche den beweglichen Abschnitt bilden, verbindet, und dass die flexible Membran (4) einen ringförmigen Rohrstutzen bildet, wobei die Vorrichtung mit Mitteln (5) zum Einspritzen von Abgas einer Turbine (52a) einer Turbopumpe im Bereich der flexiblen Membran zwischen dem festen Abschnitt (1) und dem die Düse verlängernden beweglichen Abschnitt (2) vorgesehen ist.

2. Düse nach Anspruch 1, für welche der ringförmige Rohrstutzen konfiguriert ist, um das Gas über den Umfang des Austrittsquerschnitts des festen Abschnitts (1) der Düse zu verteilen.

3. Düse nach Anspruch 1 oder 2, für welche der ringförmige Rohrstutzen an einem Gelenk (6) des beweglichen Teils angeordnet ist.

4. Düse nach einem der vorhergehenden Ansprüche, für welche die flexible Membran ein auf Kieselsäure basierendes Gewebe ist, welches für eine Temperaturdauerbeständigkeit von mindestens 1000°C angepasst ist.

5. Düse nach einem der vorhergehenden Ansprüche, für welche die Barriere ein keramisches Isolationsmittel zwischen zwei Geweben umfasst, wobei das eine von einem aus einer keramischen, feuerfesten Aluminiumborsilicat-Faser auf der heißen Seite und das andere aus Aramidfasern, wie beispielsweise Poly-Paraphenylenterephthalamid auf der kalten Seite hergestellten Gewebe gebildet wird, wobei dieses letztere Gewebe dafür vorgesehen ist, die mechanische Beständigkeit des Produkts zu gewährleisten.

6. Raketentriebwerk, aufweisend eine Düse mit festem Abschnitt (1), beweglichem Abschnitt (2) und Abdichtungsvorrichtung nach einem der vorhergehenden Ansprüche, für welches die Klappen um den Austrittsquerschnitt der Düse des Raketentriebwerks herum in Verlängerung des festen Abschnitts angeordnet sind.

7. Raketentriebwerk nach Anspruch 6, für welches die flexible Membran einen ringförmigen Rohrstutzen zur Einspritzung von Abgasen der Turbine (52a) der Turbopumpe zur Versorgung des Raketentriebwerks zwischen dem festen Abschnitt der Düse und dem die Düse verlängernden beweglichen Abschnitt bildet, wobei der Druck der Abgase geregelt wird, um größer als der Druck der Gase am Austritt des festen Abschnitts der Düse zu sein.

8. Luftfahrzeug, aufweisend ein Raketentriebwerk nach Anspruch 6 oder 7, für welches die Klappen (2a, 2b) an einem Rahmen (100) des Fahrzeugs angelenkt sind.

9. Luftfahrzeug nach Anspruch 8, für welches der Rahmen (100) Teil des hinteren Rumpfes (101) bildet, in welchem das Raketentriebwerk (10) installiert ist.

10. Luftfahrzeug nach Anspruch 8 oder 9, für welches die Klappen (2a, 2b) beweglich und dafür angepasst sind, am beweglichen Teil:
eine geschlossene konische Form (A) einzunehmen, um eine äußere aerodynamische Form zu bilden, welche den Luftwiderstand des Fahrzeughecks im atmosphärischen Flug bei ausgeschaltetem Raketentriebwerk minimiert;
eine zylindrische Form (B) im Moment der Zündung des Raketentriebwerks einzunehmen;
eine divergierende konische Form (C) in Verlängerung und Kontinuität des Austrittsquerschnitts des Diffusors des Raketentriebwerks einzunehmen, um die Expansion des Strahls des Raketentriebwerks zu begünstigen.

11. Luftfahrzeug nach Anspruch 10, für welches die Öffnung des Konus in Abhängigkeit von dem Anstieg der Höhe während des von der Rakete angetriebenen Flugs variabel ist.

12. Luftfahrzeug nach Anspruch 10 oder 11, aufweisend einen Mechanismus (6, 7, 8, 9) zum Schwenken der Klappen, welcher angepasst ist, differentielle Öffnungen oder Schließungen der Klappen zu ermöglichen, welche den Strahl des Raketentriebwerks umleiten und so eine seitliche Druckkomponente bilden, welche die Steuerung des Fahrzeugs gemäß der Nick- und Gierachse ermöglicht.

13. Luftfahrzeug nach einem der Ansprüche 8 bis 12, für welches die Klappen (2a, 2b) in zwei Reihen in Überlappung der inneren / äußeren Flächen zwischen benachbarten Klappen angeordnet und dafür angepasst sind, eine Variation des Austrittsquerschnitts zu ermöglichen, wobei gleichzeitig eine Abdeckung beibehalten wird, welche Verluste des Verbrennungsgases minimiert.

## Claims

1. A nozzle for ejecting combustion gas from a rocket engine (10) comprising a fixed part (1) and a moving part (2), extending the fixed part, said moving part, produced in the form of flaps (2a, 2b), being positioned downstream of the fixed part and forming an extension of the nozzle, **characterized in that** it comprises a sealing device providing sealing between the fixed part and the moving part and in the form of a flexible membrane (4) resistant to a local temperature of the combustion gases leaving the nozzle and connecting the end of the fixed part to a border of the flaps or petals that form the moving part, and **in that** the flexible membrane (4) forms an annular pipe, the device being provided with means (5) for injecting the exhaust gas from a turbine (52a) of a turbopump at the flexible membrane between the fixed part (1) and the moving part (2) extending said nozzle.

2. The nozzle as claimed in claim 1 for which the annular pipe is configured to distribute the gas over the perimeter of the outlet section of the fixed part (1) of the nozzle.

3. The nozzle as claimed in claim 1 or 2, for which the annular pipe is situated in line with an articulation (6) of the moving part.

4. The nozzle as claimed in any one of the preceding claims, for which the flexible membrane is a silica-based fabric able to withstand continuously a temperature of at least 1000°C.

5. The nozzle as claimed in any one of the preceding claims, for which the barrier comprises a ceramic insulator between two fabrics, one of them consisting of a fabric made from an aluminoborosilicate refractory ceramic fiber on the hot face, the other of aramid fiber type such as poly-paraphenylene terephthalamide on the cold face, the latter fabric being intended to give the product mechanical integrity.

6. A rocket engine comprising a nozzle with a fixed part (1), moving part (2) and sealing device as claimed in any one of the preceding claims, for which the flaps are arranged around the exit section of the rocket motor nozzle as an extension of the fixed part.

7. The rocket engine as claimed in claim 6, for which the flexible membrane forms an annular pipe for injecting the exhaust gases from the turbine (52a) of the turbopump supplying the rocket engine between the fixed part of the nozzle and the moving part extending said nozzle, the pressure of the exhaust gases being regulated so as to be higher than the pressure of the gases leaving the fixed part of the nozzle.

8. An aircraft comprising a rocket engine as claimed in claim 6 or 7, for which the flaps (2a, 2b) are articulated on a frame (100) of the vehicle.

9. The aircraft as claimed in claim 8, for which the frame (100) forms part of the rear fuselage (101) in which the rocket engine (10) is installed.

10. The aircraft as claimed in claim 8 or 9, for which the flaps (2a, 2b) are able to move and able to allow the moving part to adopt:
a closed cone shape (A), so as to provide an aerodynamic external shape that minimizes the drag of the base of the vehicle during atmospheric flight with the rocket engine not lit;
a cylinder shape (B) at the moment of ignition of the rocket engine;
a conical divergent shape (C) in the extension and continuation of the exit section of the rocket engine divergent so as to encourage the expansion of the rocket engine jet.

11. The aircraft as claimed in claim 10, for which the openness of the cone can be varied according to the increase in altitude during rocket propelled flight.

12. The aircraft as claimed in claim 10 or 11 comprising a mechanism (6, 7, 8, 9) for pivoting the flaps which is able to allow differential openings or closings of said flaps which deflect the jet of the rocket engine and thus create a lateral thrust component that allows the vehicle to be steered about the axes of pitch and yaw.

13. The aircraft as claimed in any one of claims 8 to 12, for which the flaps (2a, 2b) are arranged in two rows with the internal/external surfaces of adjacent flaps overlapping one another and are suited to allowing a variation in the exit section of the nozzle while at the same time maintaining an overlap that minimizes leaks of combustion gas.
